Europäisches Patentamt

**European Patent Office**

Office européen des brevets

(19)

(11) Publication number: **0 053 391**
A1

# (12) EUROPEAN PATENT APPLICATION

(21) Application number: **81110055.1**

(22) Date of filing: **01.12.81**

(51) Int. Cl.³: **H 04 B  9/00,** H 04 B  12/00,
B 60 R  16/04

(30) Priority: **01.12.80  US 211695**

(43) Date of publication of application: **09.06.82**
**Bulletin 82/23**

(84) Designated Contracting States: **DE FR GB**

(71) Applicant: **SIEMENS AKTIENGESELLSCHAFT Berlin
und München, Postfach 22 02 61,
D-8000 München 22 (DE)**

(72) Inventor: **Sichling, Georg H., Dr., 2026 Arthur Place,
Corvallis Oregon 97330 (US)**

(54)  **Fiber optical sensor system, preferably for use in automobile equipment.**

(57)  The system contains a fiber optical transmission line (6), a first light source (10) for emitting a first light beam into a first end of the transmission line (6), and at least one first light sensitive element (46) for receiving light from a second end of the transmission line (6). The first light beam contains coded information which is decoded by a decoder (72) connected to the first light sensitive element (46). The decoder (72) will issue a specific output signal when it is addressed.

The system further contains a second light source (82) for emitting a second light beam into the second end of the transmission line (6). This source (82) is activated by the decoder (72) and is controlled in dependence upon information to be transmitted, preferably in dependence of a physical parameter (p1, p2, p3, p4). The system finally contains a second receiver element (90) for receiving light from the first end of the transmission line (6). This element generates an electric output signal which is in accordance with the transmitted information. The system preferably has a large number of transducer units (60) or measuring elements associated with various second ends of the transmission line (6) for transmitting information of various nature and/or from various locations.

## BACKGROUND OF THE INVENTION

### 1. Field of the Invention

This invention in general relates to a fiber optical system for transmission of information from one location to another. In particular, this invention relates to a system for measuring one or more physical parameters or data and transmission thereof to evaluation circuitry, which circuitry is located remote from the location of the measurement. Still more particularly, this invention relates to an optical sensor system using at least one transducer for measuring a physical parameter, preferably a multitude of transducers for measuring various physical parameters, and fiber optical means for optical transmission of the sensed parameters to an evaluation circuitry. Such optical sensor system may be applied, for instance, in industrial facilities such as power plants or chemical plants, or in automobiles for the measurement and/or control of various functions.

### 2. Description of the Prior Art

In "Control Engineering", February 1979, pages 30-33, fiber optical sensors and transducers for measurement of physical parameters are disclosed. These transducers generate digital signals in accordance with the physical parameter to be measured without using analog to digital (A/D) converters. The transducers require only light in order to become energized. The aforementioned sensors may be applied for measuring temperature, pressure, flow rate, and similar physical parameters. They are included in fiber optical transmission systems. When multimode fibers are used in these systems, the transmission schemes can be digital intensity modulation (binary, pulse width, frequency, etc.), wave length or color modulation, and color multiplexing.

In the measurement of physical parameters, it is generally desirable that the transducer directly produce digital signals, rather than generate analog measurement signals. Further, the design of the transducer and the optical transmission line should be such that the system can withstand hostile environments, including electromagnetic interference. In addition, it should be possible to combine a plurality of transducers in a measuring system.

In "Control Engineering", supra, page 32, third column, and page 33, lower figures, a fiber optical sensor system is disclosed which works as a luminescent temperature transducer. The system includes a pulsed light source which emits light pulses into the first end of a fiber optical cable. The remote sensor is simply the expanded second end of the fiber optical cable, which end is coated with or is embedded in a phosphorescent material. Phosphorescencence of this material occurs after each light pulse. A response or return light signal is emitted from the phosphorescent material in backward direction through the fiber optical cable. By means of a light coupler associated with the first end of the optical cable, the response signal is coupled to a photodetector. The electric output signal of the photodetector, that is the post-excitation return signal, is fed into a sample-hold or time-constant measurement device. Here, the decay time constant of the phosphorescent process is measured. The temperature sensor device provides a pulse width which is proportional to the decay time constant, and therefore, proportional to the temperature to which the phosphorescent material is exposed.--This fiber optical sensor device is based on the measurement of a decreasing analog signal and therefore subject to disturbing influences. In addition, the costs for such a device may be high.

Thus, there is a need for a fiber optical sensor system which is not only precise and reliable, but which is also inexpensive to manufacture. Such a system should have some sort of energy source on the measurement side so that active electric devices, such as transistors, may be energized. The system should be able to measure various parameters.

A fiber optical sensor system of the kind just described appears to be particulary suited for use in automobiles. In conventional automotive applications, more than a dozen parameters are sensed at the automobile engine alone, and more than a dozen other parameters are measured at other locations of the automobile. A sensor system applied in a car should require only a minimum of cabling, should be extremely reliable, even under extreme environmental conditions like heat, cold, humidity, vibration, chemical and mechanical stress, and also under the usual wear and tear to which an automobile is subjected. A fiber optical transmission cable by nature would be little effected by all these factors and would exhibit the additional advantage that it is not subject to electromagnetic interference, which may be generated by the ignition system of the car and by other devices. Therefore, in automobile applications an electro-optical sensor system may be used widely, if such a system could be manufactured inexpensively and if the accuracy required for the sensors can be obtained. Yet, such a system cannot only be used in automobile applications, but also in other applications with similar requirements, such as industrial applications.

0053391

## SUMMARY OF THE INVENTION

### 1. Objects

It is an object of this invention to provide a fiber optical sensor system for transmission of information from one location to another through a fiber optical transmission line.

It is another object of this invention to provide a fiber optical sensor system for transmission of information from one location to another, whereby a power source, such as a battery, a power line or an electric outlet, is available on said one location.

It is still another object of this invention to provide a fiber optical system having a measurement side and an evaluation side, wherein an electric power source is provided on the evaluation side for energizing a first light source, and wherein an additional power source is provided on the measurement side for energizing at least one second light source.

It is still another object of this invention to provide a fiber optical sensor system having a measurement side and an evaluation side, wherein various measurement signals delivered by a plurality of transducers may be transmitted as optical signals via a single fiber optical transmission line from the measurement side to the evaluation side.

It is still another object of this invention to provide a fiber optical sensor system which allows for the measurement of a multitude of physical parameters under rough environmental conditions.

It is still another object of this invention to provide a fiber optical sensor system which allows for the measurement of a multitude of physical parameters and which nonetheless requires only a comparatively small expenditure.

It is still another object of this inventon to provide a fiber optical sensor system in which all different kinds of physical parameters can be transmitted and measured, such as temperature, pressure and mass flow.

It is still another object of this invention to provide a fiber optical sensor system which includes a comparatively high number of transducers, for instance, twenty or more.

It is still another object of this invention to provide a fiber optical sensor system which requires only a single light source on the first side of a fiber optical cable for addressing a multitude of transducers on the second side of said fiber optical cable.

It is still another object of this invention to provide a fiber optical sensor system having only low power requirements, such that the power can be taken, for instance, out of a car battery.

It is still another object of this invention to provide a fiber optical sensor system which can withstand hostile environmental conditions, such as humidity, oil, acid and vibrations.

It is still another object of this invention to provide a fiber optical sensor system for transmission of a physical parameter from a location of measurement to a location of evaluation, wherein electromagnetic disturbances at the location of the measurement do not have any impact on the measurement results.

It is still another object of this invention to provide a fiber optical sensor system in which external disturbances, such as electromagnetic interference (emi), do not have an impact on the measurement results, that is to provide such a sustem wherein the transmission of in- formation is immune against disturbances from outside the system.

It.is still another object of this invention to design a fiber optical sensor system for measurement of various physical parameters which provides the capability of system expansion, if additional parameters are to be measured.

It is still another object of this invention to provide a fiber optical sensor system which can be manufactured relatively simply and inexpensively.

It is still another object of this invention to provide a fiber optical sensor system which can be used for automotive applications.

It is still another object of this invention to provide a fiber optical sensor system which has an overall accuracy sufficient for an application in an automobile.

## 2. Summary
According to this invention, a fiber optical sensor system for transmission of information from one location to another contains a fiber optical transmission line or cable. This transmission line has a first end and a second end for transmitting light therebetween. The system also contains a first light source for emitting a first light beam into the first end of the transmission line. At the second end of the transmission line is arranged at least one first receiver element which is sensitive to the light of the first light source. This first receiver element is provided for receiving light of the first light source from the second end of the transmission line and for generating a first electric output signal in accordance with the light received. A decoding device is connected to the first receiver element. It will receive the first electric output signal and decode the information which is contained therein. At the second end of the transmission line is arranged a second light source. This second light source is provided for emitting a second light beam into the second end of the transmission line. The second light source is energized from an electrical energy supply device, such as a battery. The second light source is controlled by the decoding device and in dependence upon the information to be transmitted. There is also provided a second receiver element which is sensitive to the light of the second light source. The second receiver element will receive light of the second light source from the transmission line. It is provided for generating a second electric output signal in accordance with the light received. This signal is in accordance with the transmitted information.

The system is applicable for transmission of various physical parameters. These parameters may be sensed by any kind of sensor, such as an electromechanical or photoelectric sensor.

According to this invention, a preferred embodiment of the fiber optical sensor system for measuring at least

0053391

one physical parameter may comprise:

a) a first light source for emitting a coded light pulse pattern;

b) at least one first receiver element which is sensitive to the light of the first light source for delivering an output signal in accordance with the coded light pulse pattern;

c) a fiber optical transmission line having two sides, whereby the coded light pulse pattern is transmitted from the first light source arranged on the first side of the transmission line, to the first receiver element arranged on a second side of the transmission line;

d) a decoding device connected to the first receiver element for decoding the information contained in the output signal thereof;

e) a sensor element containing a resistor-capacitor combination, the time constant of which combination is dependent on the physical parameter to be measured;

f) a device for changing the charge of the capacitor in accordance with the time constant of the resistor-capacitor combination, the charge changing device being controlled by the decoding device and initiating such a change of charge at a first point of time;

g) a sensing device for sensing the voltage of the capacitor and for determining a second point of time when the voltage of the capacitor has reached a predetermined value;

h) an electrical energy source;

i) a second light source arranged on the second side of the transmission line for emitting a response light pulse when the capacitor voltage has reached the predetermined value, whereby the response light pulse is transmitted from the second side to the first side of the transmission line;

j) a second receiver element sensitive to the light of the second light source, the second receiver element being arranged on the first side of the transmission line; and

k) a measuring device connected to the second receiver element for measuring the time difference between the second and the first point of time, whereby this time difference is a function of the physical parameter to be measured.

The term "information" as used herein is intended to be applied in its most general form and comprises all sort of information, such as data, signals, physical parameters, measurement results, communication signals and code words.

The foregoing and other objects, features and advantages of the invention will be apparent from the following more particular description of preferred embodiments of the invention, as illustrated in the accompanying drawings.

## BRIEF DESCRIPTION OF THE DRAWINGS

In the drawings:

Fig. 1 is a schematic view of a fiber optical sensor system having on its measurement side various measurement elements including transducers which are exposed to various physical parameters, and on its evaluation side a primary light source and an evaluation circuit;

Fig. 2 is a detailed view of a branching element which can be used in the sensor system of Fig. 1;

Fig. 3 is an opto-electrical circuitry which can be used on the measuring side of the sensor system of Fig. 1, wherein a resistor is applied as the sensor element;

Fig. 4 is a partial view of an opto-electric circuitry similar to Fig. 3, wherein a capacitor is applied as the sensor element;

Fig. 5 is a more detailed embodiment of the evaluation circuitry shown in Fig. 1;

Fig. 6 is a time diagram showing encoded identification light pulses which are transmitted to the measuring side of the sensor system of Fig. 1;

Fig. 7 is a time diagram showing the voltage of a capacitor which is charged and discharged in response to a physical parameter, the capacitor being a component of the circuitry of Fig. 3; and

Fig. 8 is a time diagram showing light return pulses which are emitted from the measuring side to the evaluation side of the sensor system in Fig. 1.

DETAILED DESCRIPTION OF THE PREFERRED EMBODIMENTS

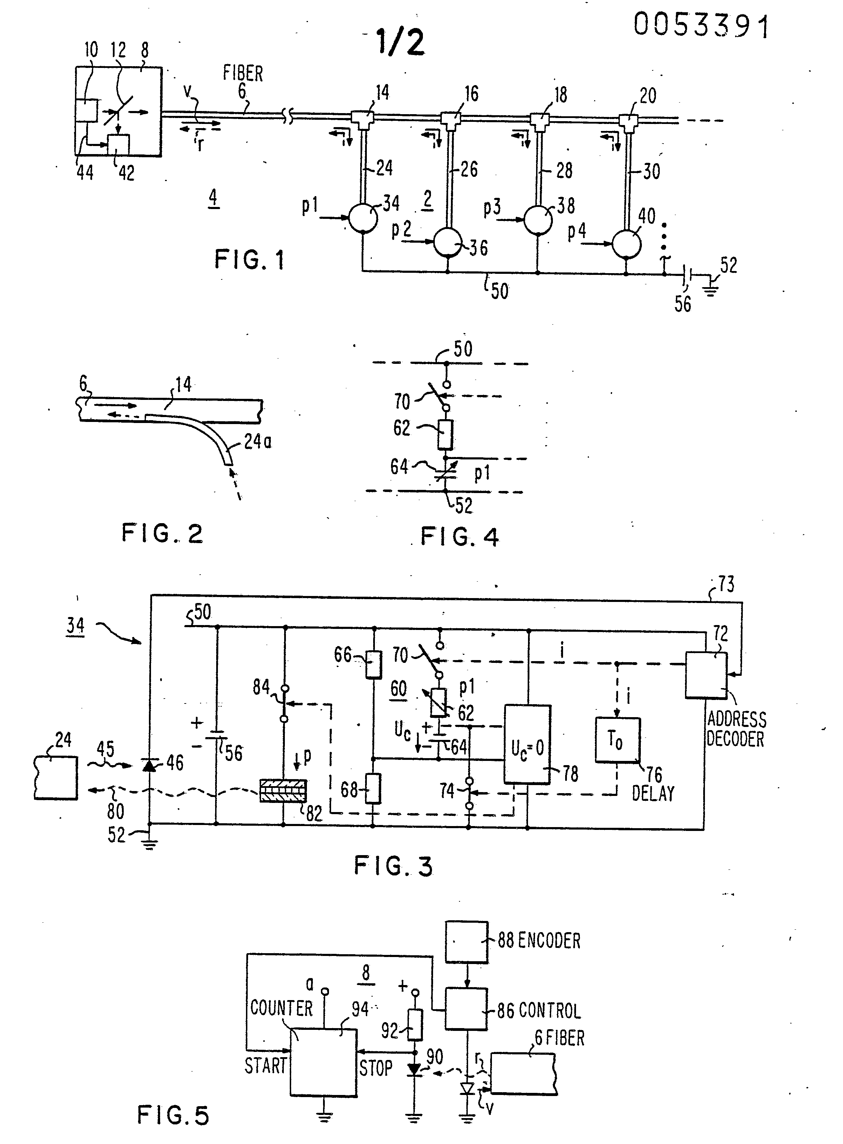

In Fig. 1 a fiber optical sensor system for transmission of physical parameters p1, p2, p3, p4... from a location of measurement or measuring side 2 to a remote location of application or control and evaluation side 4 is illustrated. The sensor system is preferably applicable in the control and/or testing of automobiles. This design does not depend on the amplitude of an optical beam and does not exhibit any specific problems of accuracy.

The system includes a fiber optical transmission line or transmission cable 6 for transmission of light in either direction. On its control and evaluation side 4, the transmission line 6 is operatively connected to an emitter and receiver device 8. The device 8 includes a first light source 10 for emitting a first light beam through a beam splitter 12 into the left end of the fiber optical transmission line 6. For instance, the light source 10 may be a light emitting diode (LED) or laser or a GaAs light emitter. The transmission line 6 leads to the measuring side 2. Here, the fiber optical transmission line 6 passes various coupling elements 14, 16, 18 and 20, four of which are illustrated. There may be provided more than four coupling elements 14, 16, 18 and 20. The coupling elements 14-20 may be, for instance, T-couplers or branching elements, such as disclosed in "Applied Optics", Vol. 16, No. 8, August 1977, pages 2195-2197. The four coupling elements 14-20 serve to distribute the first light beam among four fiber optical branches 24, 26, 28 and 30, respectively. At the end of these branches 34-40, there are provided measuring elements 34, 36, 38 and 40, respectively, which measure the physical parameters p1-p4, respectively, of the automobile. The parameters p1-p4 may be, for instance, pressure, temperature, gas flow and speed.

As will become apparent later, the measuring elements 34-40 each contain a first receiver element which is sensitive to the light of the first light source 10. The first receiver elements generate first electric output signals in accordance with the light which they receive. The measuring elements 34-40 each are energized by an electrical energy supply device, in particular by an energy source 56 such as a car battery. Each of the measuring elements 34-40 further contains a second light source for emitting a second light beam back into the branches 24-30, respectively. From here, the second light beam passes through the respective coupling element 14-20 into the left end of the fiber optical transmission line 6 on the control and evaluation side 4. From this end, the second light beam is transmitted into the device 8. The second light sources within each of the measuring elements 34-40 are energized from the same electrical energy supply device. These light sources which all have the same characteristics are controlled in a dependence of the physical parameters p1-p4, respectively. Thereby, the information represented by the physical parameters p1-p4 is optically transmitted from the measuring side 2 to the control and evaluation side 4. Transmission of the parameters p1-p4 is performed one after another.

On the control and evaluation side 4, the light from the second light source is transmitted through the beam splitter 12 to an evaluation circuitry 42. The evaluation circuitry 42 contains a second receiver element which is sensitive to the light of all second light sources. It generates a second electric output signal in accordance with the light received and thereby in accordance with the physical parameter p1, p2, p3 or p4 transmitted.

In Fig. 1 the light paths from the emitter and receiver device 8 to the individual measuring elements 34-40 are indicated by straight arrows, whereas the light paths from the measuring elements 34-40 back to the device 8 are indicated by broken arrows.

In the emitter and receiver device 8, there is also provided an address line 44 which leads from the light control circuitry for the light-source 10 to the evaluation circuitry 42. Through this address line 44, information is transmitted indicating the measuring element 34, 36, 38 or 40 which is being addressed by the control circuitry. Therefore, in the circuitry 42 the received signal can be assigned to the measuring element 34-40 which has responded.

In Fig. 2, an embodiment of the coupling element 14 is illustrated. The coupling element 14 is here designed as a well-known branching element. A small fiber line 24a branches off the main fiber optical transmission line 6. The coupling elements 16-20 may be designed in a similar way.

In Fig. 3 an embodiment of one of the measuring elements 34-40 is illustrated. This embodiment may be, for instance, the measuring element 34.

It will be noted that the end of the fiber optical branch 24 which emits the first light beam 45 is arranged close to a first receiver element 46. This first receiver element 46 may be a small photo diode or an arrangement of various photo diodes. The element 46 receives the first light beam 45 from the branch 24 and generates an output voltage in accordance with the light received. Between the end of the branch 24 and the first receiver element 46, there may be arranged optical means for concentrating the radiation on the light sensitive area of the element 46. An electrical energy source 56 is connected for generating a supply voltage bus 50 and ground 52. The voltage bus 50 energizes various electronic components in the measuring element 34, as will be discussed below. It also energizes the measuring elements 36, 38 and 40, as can be seen in Fig. 1.

According to Fig. 3, the measuring element 34 further contains a transducer unit 60 for transforming the physical parameter p1 to be measured into a corresponding electrical quantity and subsequently into an optical signal. For this purpose, the transducer unit 60 contains an RC combination formed by a resistor 62 and a capacitor 64 which are connected in series. The components forming the RC combination 62, 64 are selected such that the time constant of the RC combination 62, 64 is dependent on the physical parameter p1 to be measured. In the embodiment illustrated in Fig. 3, the resistor 62 is exposed to the parameter p1, and the resistance of the resistor 62 is directly dependent on the parameter p1, whereas the capacitance of the capacitor 64 remains constant. The resistance may vary, for instance, in accordance with temperature or pressure. Thus, the resistor 62 may be considered as the sensor proper of the measuring element 34 of the fiber optical sensor system.

The transducer unit 60 contains a voltage divider formed by the series connection of a first resistor 66 and a second resistor 68. This voltage divider 66, 68 is connected between the supply voltage bus 50 and ground 52. The first resistor 66 represents a first voltage source of a fairly constant first supply voltage, and the second resistor may be considered as a second voltage source of a second supply voltage that is also fairly constant.

The series connection consisting of the sensor resistor 62 and the capacitor 64 is coupled through a first switching element 70 to a supply voltage source. This supply voltage source is the first voltage source represented by the first resistor 66. The first switching element 70 preferably is an electronic switch, such as a FET. It is controlled by an initiation signal which is derived from a control device, specifically from an address decoder 72.

The address decoder 72, which is energized from the supply voltage bus 50, decodes an input signal arriving on its input line 73. The input line 73 is connected to the first receiver element 46. Whenever the decoded input signal indicates that the address decoder 72 has been addressed by the first light beam 45, an output pulse is issued as an initiating signal $i$. The instant when this pulse appears at the output of the address decoder 72 will be termed the first point of time. The control line between the address decoder 72 and the first switching element 70 is shown in Fig. 3 as a broken line.

The first switching element 70 in combination with the first voltage source (resistor 66) may be considered as a device for changing the charge of the capacitor 64 in accordance with the time constant of the RC combination 62,64. Particularly, the first voltage source (resistor 66) is determined to charge the capacitor 64 through the resistor 62. Therefore, the initiation signal $i$ issued to close the first switching element 70, may be considered as a "start charge" signal. In the ON position of the first switching element 70, the capacitor 64 will be charged to obtain a voltage $U_c$ of the polarity indicated in Fig. 3.

The transducer unit 60 also includes a device for discharging the capacitor 64 after it has been charged. This device basically includes the second voltage source as represented by the second resistor 68, a second switching element 74, and a delay circuit 76. The second switching element 74 which may be a transistor such as a FET, is connected parallel to the series connection of the capacitor 64 and the second resistor 68. It is actuated by the delay circuit 76, which in turn is supplied with the initiation signal $\underline{i}$ from the address decoder 72. The delay circuit 76 has a delay time $T_o$ which is fixed. The delay circuit 76 may be designed, for instance, as a counter which issues an output pulse after the initiation signal has been received. The output pulse is delayed by the delay time $T_o$ with respect to the initiation signal $\underline{i}$. The second voltage source (resistor 68) has a reverse polarity with respect to the charged capacitor 64. As soon as the second switching element 74 is closed (ON position), the voltage of the second voltage source (resistor 68) counteracts the capacitor voltage $U_c$, so that the capacitor 64 is discharged.

The transducer unit 60 also contains a device 78 for sensing the voltage of the capacitor 64 and for determining a second point of time, which is precisely the instant when the capacitor voltage $U_c$ has reached a predetermined value. In particular, this predetermined value may be zero volts.

The voltage sensing device 78 may be formed by a comparator such as a flip-flop. The voltage sensing device 78 is a control unit. It is part of an electro-op-

0053391

tical device for emitting a second light beam which is directed into the face end of the fiber optical branch 24. In particular, the device 78 generates a return or response light pulse 80. Part of the electro-optical emitting device is also a second light source 82. This light source 82 may be a light emitting diode (LED) or a laser, preferably a GaAs light emitter. It should be mentioned that the wavelength characteristics of the second light source 82 may be different from the wavelength characteristics of the first light source 10 (shown in Figs. 1 and 5). The second light source 82 is connected in series with a third switching element 84 between the supply voltage bus 50 and ground 52. The third switching element 84 may be a transistor such as a FET. It is actuated by the output of the voltage sensing device 78, as indicated by a broken control line. When the third switching element 84 is brought into its closed position (ON position), the energy source 56 will supply the second light source 82 with electric energy for emission of the return pulse 80.

From the preceding description of the voltage sensing device 78 it has become apparent that the second light source 82 will emit the return pulse 80 when the voltage $U_c$ of the capacitor 64 has reached the predetermined voltage value at the second point of time. Since the time difference between the second and the first point of time is an indication of the value of the parameter p1, the occurence of the return pulse 80 with respect to the first point of time will be determined on the control and evaluation side 4. Therefore, the return pulse 80 is transmitted from the second light source 82 through the branch 24 to the left end of the fiber optical transmission line 6 (Fig. 1) and from there to the evaluation circuitry 42 (Fig. 1). Since this measuring method is based on the measurement of pulses, it can be termed pulse code modulation.

In Fig. 4 is illustrated another embodiment of the measuring element 34, whereby only a section of the electric circuit is shown. Further components and connections may be chosen as in Fig. 3. In this embodiment the capacitance of the capacitor 64 may vary in accordance with the physical parameter p1, whereas the resistance of the resistor 62 is constant. Since the charging time and the discharging time of the capacitor 64 is dependent on the capacitance, the time difference between the second and the first point of time is again a function of the physical parameter p1.

It should be mentioned that RC combinations other than those illustrated in Figs. 3 and 4 may be chosen. For instance, it may be sufficient to use the wiring resistance as a resistor 62 of constant value.

In Fig. 5 an embodiment of the emitter and receiver device 8 is illustrated. The first light source 10 is controlled by a control unit 86. This control unit 86 is used as a signal source. For this purpose an encoder 88 is provided. The encoder 88 controls the first light source 10 as to emit a series $v$ of coded light pulse patterns. Each of these coded light pulse patterns addresses a particular address decoder 72 in one of the measuring elements 34-40. With each individual address decoder 72 a predetermined and individualized pulse pattern is associated. Each of the decoders 72 on the measuring side 2 issues an initiation signal $i$ when the transmitted coded light pulse pattern corresponds to the predetermined pulse pattern contained or stored therein.

According to Fig. 5, the evaluation circuitry comprises a second receiver element 90 which is sensitive to the light of any of the second light sources 82 on the measuring side 2. This second receiver element 90 preferably may be a photo diode. It is connected in series with a resistor 92 to a voltage source. The second light source 90 receives the return light pulse $r$ from the transmission line 6 and generates a second electric signal in accordance with the light received. In other words, whenever one of the second light sources 82 of the measuring elements 34-40 emits a return light pulse 80, an electric pulse is generated by the element 90. This pulse is conducted to a time measuring stage 94. The stage 94 measures the difference between the second and the first point of time, whereby this time difference is a function of the physical parameter to be measured, and issues an output signal $a$ accordingly. The stage 94, for instance, may be a counter which is started from the control unit 86 by a start signal that coincides with the initiation signal $i$ used on the measuring side 2. The counter is stopped by the pulse from the light sensitive element 90. The time lapse between "start" and "stop" is a function of the physical parameter to be measured.

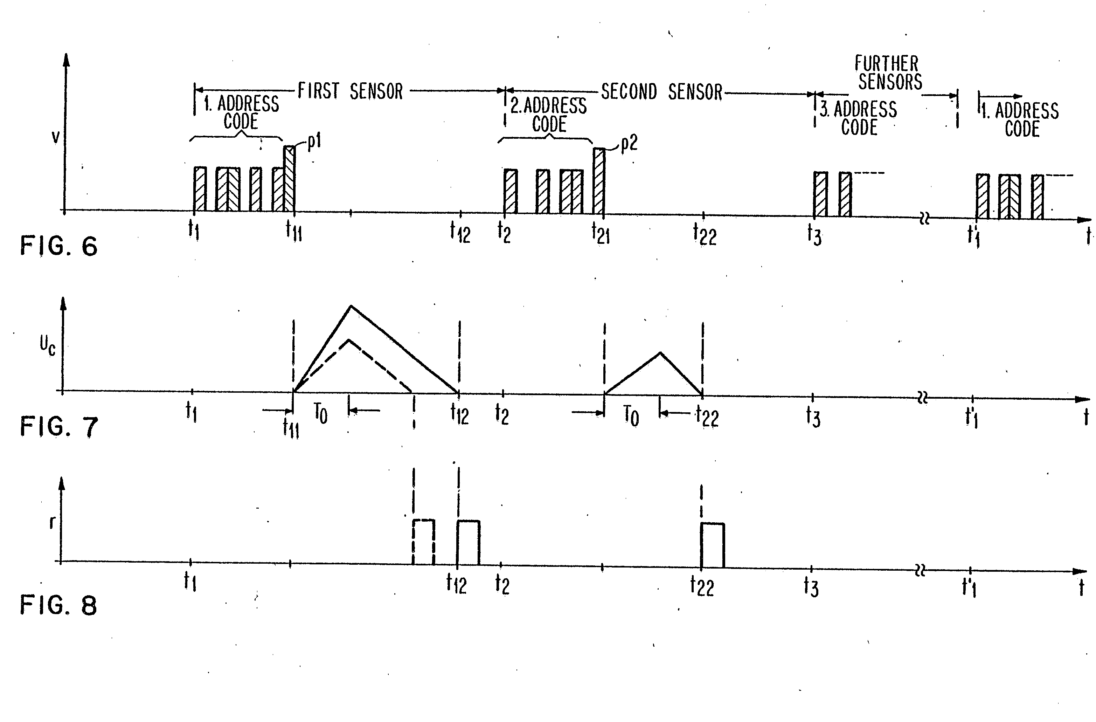

In Figs. 6 through 8 diagrams referring to the operation of the fiber optical sensor system are illustrated.

In Fig. 6 the sequence $v$ of light pulses emitted from the first light source 10 is shown. At a point of time t1, a first pattern of address code pulses is generated by the first light source 10. This pulse pattern is assigned to the first measuring element to be addressed, for instance, the measuring element 34. The pattern passes the beam splitter 12 and enters the optical fiber cable 6. Light which passes the coupling elements 14 through 20 and exits from the branches 24-30 hits the photo diode 46 in each of the measuring elements 34 through 40, respectively. The photo diode 46 converts the light into corresponding electric voltage pulses which are fed in-to the address decoder 72 for address recognition and decoding.

Subsequently, a start pulse pl is generated by the light source 10. This pulse pl may have a higher amplitude than the first address code pulses. From the rising or trailing edge of this pulse pl, the decoder 72 determines that the first address code is terminated.

The recognition of the address code in the first measuring element 34 causes the generation of the initiation sig-nal $\underline{i}$ which initiates charging and discharging of the capacitor 64. In the present embodiment, the electrical pulse corresponding to the start pulse pl is simply passed through the decoder 72 onto the first switch 70. After the fixed delay time $T_O$, this pulse will also arrive at the second switch 74. The trailing edge of the start pulse pl determines the first point of time tll, that is the instant when the first switch 70 is closed. At the point of time $(tll + T_O)$, the second switch 74 is closed, whereas the first switch 70 is opened.

As can be seen in Fig. 7, the capacitor voltage $U_c$ will rise from the first point of time tll on and decrease after the delay time $T_O$ has elapsed. At the second point of time tl2 the capacitor voltage $U_c$ will have arrived at the predetermined value of zero volts. In Fig. 7 can be seen that this second point of time tl2 is shifted on the time axis t when the value of the parameter pl is changed. A voltage curve corresponding to a second value of the parameter pl is shown in broken lines.

The output signal of the comparator 78 is generated at the second point of time t12. This output pulse closes the third switching element 84 which thereupon connects the voltage of the source 56 across the second light emitting element 82. A return light pulse 80 is generated which is transmitted back into the fiber optical cable 6. In Fig. 8 is shown the return light pulse $r$ which is emitted toward the evaluation circuitry 42 at the second point of time t12. In Fig. 8 is also shown in broken lines a return pulse $r$ which would be created if the capacitor 64 would be charged and discharged according to the capacitor voltage $U_c$ following the broken lines in Fig. 7.

The time interval between the return pulse (time t12) and the start signal (time t11) is a measure of the value of the time constant of the RC element 62, 64 which in turn is a measure of the physical parameter p1. This time interval (t12-t11) is measured by the counter 94 (see Fig. 5). In ohter words, the measurement of the parameter p1 is performed as a measurement of a time interval.

After the return signal $r$ from the first measuring element 34 has been received and after a short pause, the next measuring element 36 is addressed by second address code pulses at a point of time t2 (see Fig. 6). As will be noted in Fig. 6, the second address code is different from the first address code. Therefore, only address decoder 72 of the second measuring element 36 will now be activated to pass along the following start pulse p2. After a certain period of time, at a second point of time t22, the measuring element 36 sends back a return light pulse $r$ which can be seen in Fig. 8. The time difference (t22-t21) between the return pulse (see Fig. 8) and the start pulse (see Fig. 6) is again a measure of the physical parameter p2 to which the transducer unit 60 in the second measuring element 36 is exposed.

The measurement of the parameters p3 and p4 is performed in the same way. After this has been accomplished, a new measurement cycle is started by emitting a first pulse pattern again. This first pattern is again addressed to the first measuring element 34 which in turn will send out again a return pulse 80. Thus, a change of the parameter pl between this and the preceding measurement cycle can be determined.

While the forms of the fiber optical sensor system herein described constitute preferred embodiments of the invention, it is to be understood that the inventon is not limited to these precise forms of assembly, and that a variety of changes may be made therein without departing from the scope of the invention.

0053391

WHAT IS CLAIMED:

1. A fiber optical sensor system for transmission of information from one location to another, comprising in combination:

a) a fiber optical transmission line (6) having a first end and at least one second end for transmitting light therebetween,

b) a first light source (10) for emitting a first light beam into said first end of said transmission line (6), said first light beam containing coded information;

characterised by

c) at least one first receiver element (46) sensitive to the light of said first light source (10) for receiving light of said first light source (10) from said second end of said transmission line (6) and for generating a first electric output signal in accordance with the light received;

d) decoding means (72) connected to said first receiver element (46) for receiving said first electric output signal and for decoding information contained therein;

e) electrical energy supply means (56);

f) a second light source (82) for emitting a second light beam into said second end of said transmission line (6), said second light source (82) being energized from said electrical energy supply means (56) and being controlled by said decoding means (72) and in dependence upon information to be transmitted; and

g) a second receiver element (90) sensitive to the light of said second light source (82) for receiving light of said second light source (82) from said transmission (6) line and for generating a second electric output signal in accordance with the light received and thereby in accordance with the transmitted information.

2. The fiber optical sensor system according to claim 1, characterised in that said energy supply means (56) comprises a battery which is connected for energizing a plurality of said second light sources.

3. The fiber optical sensor system according to claim 1, characterised by a transducer unit (60) containing a sensor element for receiving said information to be transmitted and for supplying an electric sensor output signal in accordance therewith, said transducer unit (60) being connected to and controlling said second light source (82).

4. The fiber optical sensor system according to claim 1, characterised in that said information to be transmitted is information about a physical parameter (p1-p4) to be measured.

5. The fiber optical sensor system according to claim 4, characterized in that said transducer unit (60) comprises an RC combination containing a resistor (62) and a capacitor (64), the time constant of said RC combination being dependent on said physical parameter to be measured.

6. The fiber optical sensor system according to claim 5, characterised in that said transducer unit further comprises:

   1) means for changing the charge of said capacitor (64) in accordance with said time constant, said means being actuated by an initiation signal ($\underline{i}$)

issued at a first point of time;

2) means for sensing the voltage of said capacitor (64) and for determining a second point of time, said second point of time being the point of time when said capacitor voltage has reached a predetermined value; and

3) means for actuating said second light source (82), said second light source (82) emitting a light pulse when said capacitor voltage has reached said predetermined value and said light pulse being transmitted from said second end to said first end of said optical transmission line (6);

and wherein said fiber optical sensor system further comprises:

means connected to said second receiver element for measuring the difference between said first and said second point of time, said time difference being a function of said physical parameter to be measured.

7. The fiber optical sensor system according to claim 6, characterised in that ~~wherein~~ said means for changing the charge of said capacitor (64) of said RC combination comprises a voltage source for charging said capacitor (64) through said resistor (62) of said RC combination.

8. The fiber optical sensor system according to claim 7, characterised in that ~~wherein~~ said means for changing the charge of said capacitor additionally comprises means for discharging said capacitor.

9. The fiber optical sensor system according to claim 5, wherein said transducer unit (160) contains said resistor (62) and said capacitor (64) in a series connection, wherein said series connection is coupled to a supply voltage source through first switching means (70) and wherein control means are provided for controlling said first switching means (70) in dependence on an initiation signal ($\underline{i}$).

10. The fiber optical sensor system according to claim 5, characterised in that said resistor (62) in said RC combination has a resistance which is dependent on said physical parameter.

11. The fiber optical sensor system according to claim 5, characterised in that said capacitor (64) in said RC combination has a capacitance which is dependent on said physical parameter.

12. The fiber optical sensor system according to claim 6, characterised in that said means for changing the charge of said capacitor (64) comprises a first voltage source of a pre-determined polarity for charging said capacitor (64), and a second voltage source of reverse polarity for subsequently discharging said capacitor.

13. The fiber optical sensor system according to claim 12, characterised in that second switch means (74) are connected between said second voltage source and said capacitor (64) of said RC combination.

14. The fiber optical sensor system according to claim 13, characterised in that a delay member (76) is provided for controlling said second switch means (74) such as to apply said voltage of reverse polarity to said capacitor (64) at a predetermined period of time after said initiating signal (i) was issued.

15. The fiber optical sensor system according to claim 1, characterised in that said energy supply means (56) is connected to said second light source (82) through third switch means (84), where- by said energy supply means (56) supplies said second light source (82) with electric energy for emission of said second light beam when said third switch means (84) is in an ON position.

16. The fiber optical sensor system according to claim 6, characterised in that said energy supply means (56) is connected to said second light source (82) through third switch means (84), whereby said energy supply means (56) supplies said second light source (82) with electric energy for emission of said second light beam when said third switch means (84) is in an ON position, and wherein said third switch means (84) is actuated by said voltage sensing means (78).

17. The fiber optical sensor system according to claim 1, characterised by output means for delivering an output signal in dependence on said time difference and therby in dependence on said physical parameter.

18. The fiber optical sensor system according to claim 1, characterised in that an encoder (88) is provided for controlling said first light source (10) as to emit a series of coded light pulse patterns, wherein a plurality of receiver elements (46) is optically connected to said fiber optical transmission line (6), wherein an individual decoder (72) is connected to each of said receiver elements (46), whereby a predetermined and individualized pulse pattern is associated with each individual decoder (72), each of said decoders (72) decoding said coded pulse patterns and issuing an initiation signal (1) to said means for changing the charge when the coded pulse pattern received equals the predetermined and individualized pulse pattern.

19. The fiber optical sensor system according to claim 18, characterised in that said encoder (88) is connected to control said first light source (10) such that at first said series of coded light pulse patterns and subsequently a start pulse are emitted from said first light source (10).

20. The fiber optical sensor system according to claim 1, characterised in that said second receiver element (90) is arranged for receiving light from said first end of said transmission line (6).

21. The fiber optical sensor system according to claim 1, characterised in that said transducer unit (60) is determined to measure a physical parameter in an automobile.

0053391

FIG. 1

FIG. 2

FIG. 4

FIG. 3

ADDRESS DECODER

88 ENCODER

86 CONTROL

6 FIBER

COUNTER

START

STOP

FIG. 5

FIG. 6

v

FIRST SENSOR

SECOND SENSOR

FURTHER SENSORS

1. ADDRESS CODE

2. ADDRESS CODE

3. ADDRESS CODE

1. ADDRESS CODE

p1

p2

$t_1$ $t_{11}$ $t_{12}$ $t_2$ $t_{21}$ $t_{22}$ $t_3$ $t'_1$ t

FIG. 7

$U_c$

$t_1$ $t_{11}$ $T_0$ $t_{12}$ $t_2$ $T_0$ $t_{22}$ $t_3$ $t'_1$ t

FIG. 8

r

$t_1$ $t_{12}$ $t_2$ $t_{22}$ $t_3$ $t'_1$ t

0053391

European Patent Office

**EUROPEAN SEARCH REPORT**

0053391

Application number

EP 81 11 0055

| Category | Citation of document with indication, where appropriate, of relevant passages | Relevant to claim |
|---|---|---|
| X | THE BELL SYSTEM JOURNAL, vol. 58, no. 7, September 1979, New York (US) R.C. MILLER et al.: "Optically Powered Speech Communication Over a Fiber Lightguide" pages 1735-1741 | 1,3,4, 20 |
| Y | * Page 1735, line 19 - page 1737, line 22; page 1739, line 11 - page 1740 - line 15; page 1740, line 40, - page 1741, line 1; figures 1,2 * | 2,21 |
| | --- | |
| Y | DE - A - 2 338 882 (BOSCH) | |
| | * Page 8, line 29 - page 10, line 8; figures 3,4 * | 2,21 |
| A | & GB - A - 1 482 774 | 1 |
| | --- | |
| A | DE - A - 2 839 127 (BBC) | |
| | * Page 4, line 31 - page 6, line 11 * | 1,21 |
| | --- | |
| A | GB - A - 1 540 907 (STANDARD TELEPHONES) | |
| | * Page 1, lines 10-39; page 3, lines 11-20; figure 10 * | 1,4 |
| | --- | |
| A | DE - A - 2 801 104 (SATO KOKI CO LTD) | |
| | * Page 6, line 1 - page 8, line 3; figure 1 * | 5-9 |
| | & US - A - 4 156 810 | |
| | --- | |

**CLASSIFICATION OF THE APPLICATION (Int. Cl. 3)**

H 04 B 9/00
          12/00
B 60 R 16/04

**TECHNICAL FIELDS SEARCHED (Int.Cl. 3)**

H 04 B 9/00
G 08 C 23/00
G 01 R 15/07
H 04 Q 9/14
B 60 R 16/04
H 04 B 12/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search The Hague | Date of completion of the search 01-03-1982 | Examiner STRASSEN | |

EPO Form 1503.1  06.78

| European Patent Office | EUROPEAN SEARCH REPORT |
| --- | --- |

| DOCUMENTS CONSIDERED TO BE RELEVANT | | | CLASSIFICATION OF THE APPLICATION (Int. Cl.³) |
| --- | --- | --- | --- |
| Category | Citation of document with indication, where appropriate, of relevant passages | Relevant to claim | |
| A | US.- A - 3 518 628 (G.J. GIEL et al.)<br><br>* Column 3, line 73 - column 4, line 7; column 4, line 70 - column 5, line 52; figure 1 * | 1,4,18 | |
| | | | TECHNICAL FIELDS SEARCHED (Int. Cl.³) |

EPO Form 1503.2  06.78